# FASCICULE DE BREVET EUROPEEN

(11) **EP 0 547 466 B1**
(45) Date de publication et mention de la délivrance du brevet: **25.09.1996**
(21) Numéro de dépôt: 92120844.3
(22) Date de dépôt: 07.12.1992
(51) Int. Cl.: H01M 10/54, C22B 3/00

(54) **Machine de traitement de l'électrolyte d'accumulateurs au plomb usagés**
Maschine zur Behandlung von Elektrolyt aus gebrauchten Bleiakkumulatoren
Machine for the treatment of electrolyte from spent lead-acid batteries

(30) Priorité: 10.12.1991 FR 9115285
(43) Date de publication de la demande: 23.06.1993
(73) Titulaire: COMPAGNIE EUROPEENNE D'ACCUMULATEURS, F-92111 Clichy Cédex (FR)
(72) Inventeur: Zelverte, Alain, F-92160 Antony (FR)
(74) Mandataire: Leszczynski, André

(56) Documents cités:
- US-A- 4 018 567
- US-A- 4 655 928

## Description

L'invention concerne une machine de traitement de l'électrolyte d'accumulateurs au plomb usagés, en particulier pour les accumulateurs de véhicules automobiles.

On connaît des procédés industriels de traitement de l'électrolyte d'accumulateurs au plomb usagés. Ces procédés utilisent deux réactifs de neutralisation, le premier étant la soude ou la chaux, le deuxième étant le carbonate de sodium. Ces réactifs sont ajoutés l'un après l'autre en fonction de deux points de consigne de pH. On provoque ensuite une coagulation avec un sel de fer pour obtenir de grosses particules agglomérant du fer et du plomb. On fait grossir ensuite les particules pour les accrocher entre elles. Puis interviennent des opérations de décantation et de filtration sur filtre-presse. Le plomb est récupéré dans le filtre-presse. Le liquide qui sort du filtre-presse est renvoyé dans le circuit de traitement car il contient encore du plomb. L'eau qui est rejetée vient de la surverse du décanteur.

Ces procédés sont essentiellement industriels et exigent donc des équipements importants. Ils ne sont pas adaptés à la réalisation de petites unités pouvant être utilisées par exemple dans des centres commerciaux ou dans des garages de réparation automobile. Ils utilisent en outre des produits dangereux comme la soude ou la chaux. Ceci fait que, en l'absence de petites unités de traitement, les électrolytes d'accumulateurs sont souvent vidés dans les égouts ou simplement répandus sur le sol.

Ces rejets sauvages ne peuvent plus être tolérés. En effet, le plomb est très mauvais pour l'épuration biologique des stations de traitement des eaux des villes. Il empoisonne toutes les boues activées de ces stations. En plus, les nouvelles législations en vigueur pour les rejets liquides imposent des normes de pH dont les limites sont généralement 5,5 et 8,5. Le taux de plomb dans l'eau rejetée en doit pas dépasser 1 mg/l.

L'invention permet de remédier à ces inconvénients. Elle concerne une machine de traitement de l'électrolyte par petite quantités, pouvant utiliser des réactifs peu dangereux. Le plomb est récupérable facilement. L'eau rejetée n'est pas polluante puisque son pH et sa teneur en plomb sont compris dans les normes en vigueur. La machine est de fonctionnement simple et non dangereux pour l'environnement ou l'utilisateur.

L'invention a donc pour objet une machine telle que définie dans la revendication 1.

La machine comprend avantageusement une poche de filtration permettant de filtrer la phase liquide en sortie du décanteur. L'avantage de cette poche est de constituer une sécurité en cas d'un mauvais fonctionnement éventuellement de la machine.

Le pH est avantageusement mesuré dans un circuit dans lequel on fait circuler une fraction du contenu du réacteur. Ceci permet une mesure plus efficace.

Le détecteur de pH peut comprendre une électrode de mesure placée dans le bas d'une partie du circuit en forme de U, ce circuit pouvant être alimenté en eau après l'arrêt de la machine pour garder l'électrode dans l'eau. Ceci favorise une bonne conservation de l'électrode.

Le réactif de neutralisation peut avantageusement être du carbonate de sodium qui est un réactif peu dangereux et qui peut se manipuler sans précaution particulière. Il permet de descendre bas dans le degré d'épuration de l'eau, le carbonate de plomb étant très insoluble.

Le floculant peut avantageusement être du polychlorosulfate d'aluminium qui a l'avantage d'intervenir peu sur le pH.

L'introduction de floculant dans le réacteur peut être réalisée par une pompe à débit constant. Une petite quantité de floculant étant suffisante pour la capacité de la machine.

L'invention sera mieux comprise et d'autres avantages et particularités apparaîtront à la lecture de la description qui va suivre, donnée à titre non limitatif, accompagnée des dessins annexés parmi lesquels :
- la figure 1 représente schématiquement une première variante de machine de traitement selon l'invention,
- la figure 2 représente schématiquement une seconde variante de machine de traitement selon l'invention.

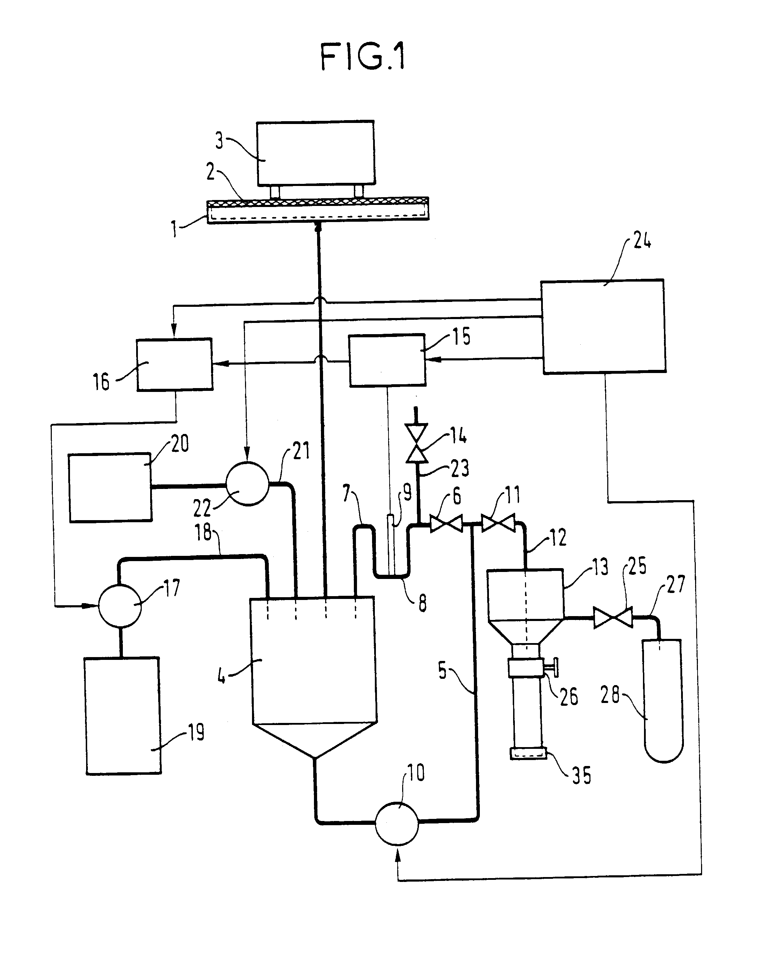

La machine de traitement selon l'invention et représentée à la figure 1 comprend un bac de réception 1 pourvu d'un caillebotis 2. Un accumulateur 3, dont on veut traiter l'électrolyte, est retourné sur le bac de réception. Les bornes de l'accumulateur tombent dans les trous du caillebotis qui permet d'amortir les chocs. Par gravité, l'électrolyte tombe directement dans le réacteur 4.

La machine peut alors être mise en route immédiatement ou un peu plus tard si l'on prévoit de vider d'autres accumulateurs. Lorsque la machine est mise en route par le circuit de commande 24, le traitement se fait de manière automatique.

Le bas du réacteur 4 comporte une section effilée et son extrémité inférieure est reliée à une conduite 5 qui se prolonge, après une électrovanne 6, par une conduite 7 revenant au réacteur par sa face supérieure. La conduite 7 comporte une partie 8 en forme de U dont le bas est équipé d'une électrode de pH 9. Cette électrode 9 est donc en contact avec un fluide pouvant circuler dans la conduite 7. Ainsi, une fraction du liquide contenu dans le réacteur peut par l'intermédiaire de la pompe 10, et si l'électrovanne 6 est ouverte, circuler par le circuit constitué des conduites 5 et 7 pour retourner dans le réacteur.

Une électrovanne 11 permet de relier la conduite 5 à une conduite 12 aboutissant au-dessus d'un décanteur 13.

Une électrovanne 14 permet d'amener de l'eau, par une conduite 23, à un point de la conduite 7 situé entre l'électrode 9 et l'électrovanne 6.

Au début du cycle de traitement, les électrovannes 11 et 14 étant fermées et l'électrovanne 6 ouverte, la mise en route de la machine provoque la mise en marche de la pompe 10. L'électrode 9 est baignée par la circulation d'une fraction du contenu du réacteur 4. Elle est reliée à un détecteur de pH 15 qui transmet la valeur relevée à un régulateur de pH 16 qui compare la valeur relevée à la valeur de consigne. Le détecteur 15 et le régulateur 16 sont mis en route par le circuit 24. Cette valeur de consigne est comprise entre 5,5 et 8,5 et de préférence entre 7,5 et 8.

La valeur relevée étant au début du cycle inférieur au point de consigne, le régulateur 16 provoque la mise en marche de la pompe 17. La pompe 17 introduit dans le réacteur, par l'intermédiaire de la conduite 18, le réactif de neutralisation contenu dans le réservoir 19. Ce réactif de neutralisation peut être obtenu par dissolution d'une poudre de carbonate de sodium dans de l'eau, à raison par exemple de 15% en poids de carbonate de sodium dans la solution basique.

On introduit également en début de cycle une dose du floculant contenu dans le réservoir 20 grâce à la conduite 21 sur laquelle est montée une pompe à débit constant 22 mise en route en début de cycle par le circuit 24.

Le floculant peut être un sel d'aluminium tel que le polychlorosulfate d'aluminium. On peut notamment utiliser le polychlorosulfate d'aluminium commercialisé sous le nom d'ERPAFLOC ALP par la société ERPAC et qui est liquide par nature à la température ambiante.

Une dose de 2 à 5 ml de floculant est suffisante pour traiter le contenu d'un ou de plusieurs accumulateurs.

En fonction du pH mesuré et de son écart par rapport à la valeur de consigne, la pompe 17 continue d'injecter du carbonate de sodium. Lorsque la valeur du pH mesuré atteint la valeur de consigne, le régulateur 16 commande l'arrêt de la pompe 17. L'électrolyte est neutralisé.

Le plomb a alors précipité sous forme d'hydroxycarbonate Pb₃ (CO₃)₂ (OH)₂. La pompe 10 est laissée en fonctionnement pour brasser la solution.

Ensuite, le régulateur 16 ayant envoyé au circuit 24 l'instruction que la procédure peut continuer, le circuit 24 ordonne la fermeture de l'électrovanne 6 et l'ouverture de l'électrovanne 11, l'électrovanne 25 étant fermée. Le contenu du réacteur est alors transféré dans le décanteur 13 et les particules contenant le plomb descendent au fond du décanteur dont la partie inférieure, avantageusement de section réduite par rapport à la partie supérieure, se termine par une vanne de vidange 26 et est pourvue d'un bouchon de sécurité 35.

Il est avantageux que le liquide introduit dans le décanteur présente une faible vitesse de remontée pour que la décantation commence dès le transfert et que le cycle de traitement soit plus court. La partie haute du décanteur est dimensionnée de manière à obtenir une vitesse ascentionnelle faible lorsque la pompe 10 est en fonctionnement.

Après décantation, l'électrovanne 25 placée sur la conduite 27 est ouverte. L'eau clarifiée de la partie haute du décanteur s'écoule gravitairement dans la poche de filtration 28 et est rejetée. La commande de l'électrovanne 25 est réalisée par le circuit 24.

La poche de filtration est une sécurité en cas de mauvais fonctionnement de la machine, par exemple si on a oublié d'approvisionner en floculant le réservoir 20. Dans ce cas, la décantation est incomplète et la poche 28 arrête le plomb qui n'a pas décanté.

Le plomb décanté est évacué périodiquement dans un fût pour faciliter le nettoyage. Ceci peut être réalisé en dévissant le bouchon de sécurité 35 et en ouvrant la vanne de vidange 26. Les boues de plomb sont alors récupérées et transférées dans un fût. Le fût une fois plein sera expédié chez un affineur.

Si, à la fin d'un cycle de traitement, il reste un dépôt de matière dans le réacteur, celui-ci sera éliminé (par dissolution) dès le démarrage du cycle suivant, l'électrolyte introduit dans le réacteur étant au départ acide. Le système est donc autonettoyant, ce qui constitue un avantage.

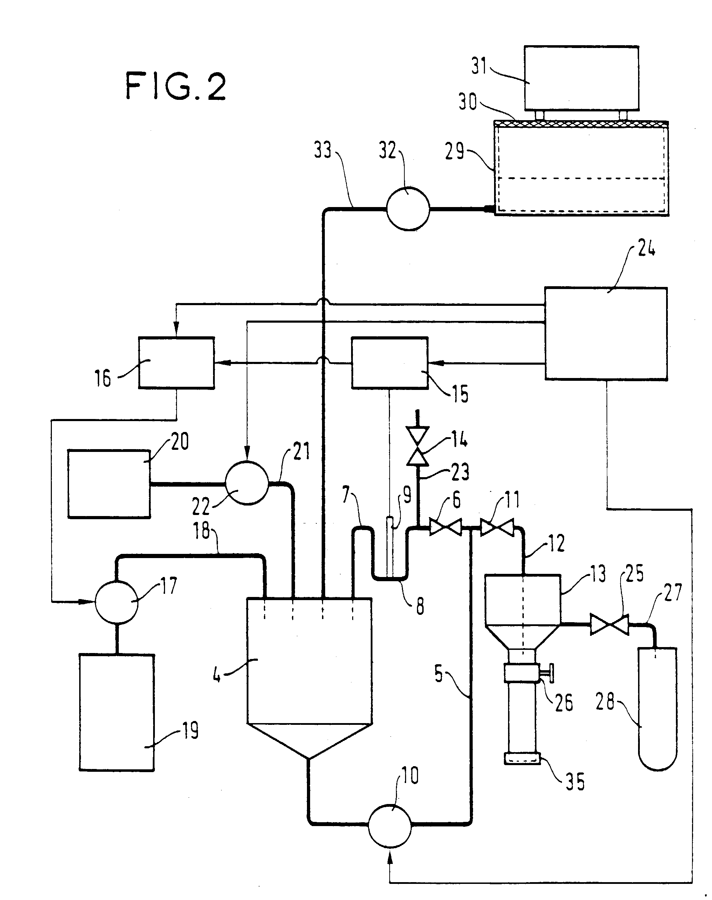

La seconde variante de réalisation représentée à la figure 2 diffère de la précédente par le bac de réception de l'électrolyte. Dans cette version, le bac 29 est une cuve recouverte d'un caillebotis 30 sur lequel on renverse les batteries 31. La mise en route de la machine peut alors s'effectuer automatiquement en fonction du niveau d'électrolyte contenu dans la cuve grâce à un détecteur de niveau d'électrolyte qui commande la mise en route de la pompe 32 placée sur la conduite 33 aboutissant dans le réacteur 4. La suite des opérations se déroule de la même manière que pour la première variante.

Le cycle peut se terminer, pour les deux variantes de réalisation, par l'ordre d'ouverture de l'électrovanne 14 donné par le circuit 24. L'électrode 9 est alors rincée par de l'eau amenée par la conduite 23. L'excédent d'eau tombe dans le réacteur 4 ainsi que le liquide qui était resté dans la partie 8 en forme de U tandis que l'électrode est conservée dans l'eau propre après la fermeture de l'électrovanne 14. Le réacteur reçoit donc encore un peu de liquide qui sera traité lors d'un prochain cycle.

Pour la deuxième variante de réalisation, l'ordre d'ouverture de l'électrovanne 14 n'est donné par le circuit 24 que si l'indicateur de niveau d'électrolyte du bac 29 indique qu'il n'y a pas assez d'électrolyte pour réaliser un nouveau cycle de traitement. Le rinçage de l'électrode est donc réalisé dans cette variante à l'issue du dernier cycle de traitement.

Dans les deux variantes de réalisation, il est possible d'ajouter, après l'étape de neutralisation, un insolubilisant du plomb afin d'améliorer le degré d'épuration de l'eau. On peut utiliser par exemple des sels de sodium de composés organiques soufrés.

L'ajout peut être réalisé à partir d'un réservoir de stockage, grâce à une pompe à débit constant commandé par le circuit 24 et une conduite dirigée vers le réacteur 4.

## Revendications

1. Machine de traitement automatique de petites quantités d'électrolyte d'accumulateurs au plomb usagés, comprenant un bac de réception de l'électrolyte transférant, de préférence par gravité, l'électrolyte vers un réacteur (4), où l'électrolyte est traité par lot lors d'un cycle de traitement, des moyens pour établir une circulation de liquide dans un circuit (5,7,10) extérieur au réacteur, le liquide étant prélevé dans le réacteur et renvoyé dans ce dernier après avoir parcouru ledit circuit, un détecteur (15) apte à mesurer le pH du liquide circulant dans ledit circuit, un réservoir (19) pour stocker sous forme liquide un réactif de neutralisation, des moyens (17,18) pour prélever du réactif de neutralisation dans ledit réservoir et l'introduire dans le réacteur contenant l'électrolyte à neutraliser, des moyens de régulation du pH pour commander, en fonction de la valeur de pH mesurée par ledit détecteur, lesdits moyens pour prélever du réactif de neutralisation dans ledit réservoir et l'introduire dans le réacteur jusqu'à l'obtention d'une valeur de pH compatible avec un rejet à l'égout de l'électrolyte neutralisé, des moyens (21,22) d'introduction d'un floculant du plomb dans le réacteur, des moyens permettant le transfert, après neutralisation et floculation, du contenu du réacteur vers un décanteur vidangeable (13), des moyens (25,27) pour prélever la phase liquide épurée en partie haute du décanteur, et la rejeter, de préférence après traversée d'une poche de filtration (28).

2. Machine selon la revendication 1, caractérisée en ce que le détecteur de pH comprend une électrode de mesure (9) placée dans le bas d'une partie (8) dudit circuit (5,7) en forme de U, et des moyens pour alimenter en eau ledit circuit après l'arrêt de la machine, pour garder l'électrode dans l'eau.

3. Machine selon l'une quelconque des revendications 1 et 2, caractérisée en ce que le réactif de neutralisation est du carbonate de sodium.

4. Machine selon l'une quelconque des revendications 1 à 3, caractérisée en ce que le floculant est du polychlorosulfate d'aluminium.

5. Machine selon l'une quelconque des revendications 1 à 4, caractérisée en ce que les moyens d'introduction du floculant comprennent une pompe à débit constant (22).

6. Machine selon l'une quelconque des revendications 1 à 5, caractérisée en ce qu'elle comprend des moyens d'introduction d'un insolubilisant du plomb.

7. Machine selon la revendication 6, caractérisée en ce que l'insolubilisant du plomb est un sel de sodium de composé organique soufré.

8. Machine selon l'une quelconque des revendications 1 à 7, caractérisée en ce que les moyens d'introduction du réactif de neutralisation comprennent une pompe (17).

9. Machine selon l'une quelconque des revendications 1 à 8, caractérisée en ce que les moyens de transfert du contenu du réacteur vers le décanteur comprennent une pompe (10).

10. Machine selon l'une quelconque des revendications 1 à 9, caractérisée en ce que la partie basse du décanteur (13) est équipée d'un bouchon de sécurité (35).

11. Machine selon l'une quelconque des revendications 1 à 10, caractérisée en ce que le transfert de l'électrolyte du bac de réception (29) vers le réacteur se fait par l'intermédiaire d'une pompe (32).

## Patentansprüche

1. Maschine zur automatischen Behandlung kleiner Elektrolytmengen aus gebrauchten Bleiakkumulatoren, umfassend einen Elektrolyt-Auffangtrog, aus dem der Elektrolyt vorzugsweise unter Schwerkraft in einen Reaktor (4) gelangt, wo er in einem Behandlungszyklus chargenweise behandelt wird, eine Einrichtung zur Aufrechterhaltung eines Flüssigkeitskreislaufs in einem Kreis (5, 7, 10) außerhalb des Reaktors, wobei die Flüssigkeit aus dem Reaktor entnommen und nach Durchlaufen des Kreises in diesen zurückgeleitet wird, einen Detektor (15) zur Messung des pH-Wertes der durch den Kreis zirkulierenden Flüssigkeit, einen Vorratsbehälter (19) zur Aufbewahrung eines Neutralisationsmittels in flüssiger Form, eine Einrichtung (17, 18) zur Entnahme von Neutralisationsmittel aus dem Vorratsbehälter und dessen Einleitung in den den zu neutralisierenden Elektrolyt enthaltenden Reaktor, eine Einrichtung zur Regelung des pH-Wertes, um die Einrichtung zur Entnahme von Neutralisationsmittel aus dem Vorratsbehälter und zu dessen Einleitung in den Reaktor als Funktion des von dem Detektor gemessenen pH-Wertes zu steuern, bis sich ein pH-Wert einstellt, der mit einem Abtropfen des neutralisierten Elektrolyts kompatibel ist, eine Einrichtung (21, 22) zum Einleiten eines Blei-Flockungsmittels in den Reaktor, eine Einrichtung zur Überführung des Reaktorinhalts nach Neutralisation und Flockung in einen entleerbaren Klärbehälter (13) und eine Einrichtung (25, 27) zur Entnahme der gereinigten flüssigen Phase an einem oberen Bereich des Klärbehälters und zu ihrer Ausscheidung, vorzugsweise nach Durchsetzen einer Filterkammer (28).

2. Maschine nach Anspruch 1, dadurch gekennzeichnet, daß der pH-Detektor eine in einem U-förmigen Teil (8) des Kreises (5, 7) unten angeordnete Meßelektrode (9) sowie eine Einrichtung aufweist, die den Kreis nach dem Anhalten der Maschine mit Wasser speist, um die Elektrode im Wasser zu halten.

3. Maschine nach Anspruch 1 oder 2, dadurch gekennzeichnet, daß das Neutralisationsmittel Natriumcarbonat ist.

4. Maschine nach einem der Ansprüche 1 bis 3, dadurch gekennzeichnet, daß das Flockungsmittel Aluminiumpolychlorsulfat ist.

5. Maschine nach einem der Ansprüche 1 bis 4, dadurch gekennzeichnet, daß die Einrichtung zum Einleiten des Flockungsmittels eine Pumpe (22) mit konstanter Förderleistung aufweist.

6. Maschine nach einem der Ansprüche 1 bis 5, dadurch gekennzeichnet, daß sie eine Einrichtung zum Einleiten eines Mittels zum Unlöslichmachen des Bleis aufweist.

7. Maschine nach Anspruch 6, dadurch gekennzeichnet, daß das Mittel zum Unlöslichmachen des Bleis ein Natriumsalz einer organischen Schwefelverbindung ist.

8. Maschine nach einem der Ansprüche 1 bis 7, dadurch gekennzeichnet, daß die Einrichtung zum Einleiten des Neutralisationsmittels eine Pumpe (17) aufweist.

9. Maschine nach einem der Ansprüche 1 bis 8, dadurch gekennzeichnet, daß die Einrichtung zum Überführen des Reaktorinhalts in den Klärbehälter eine Pumpe (10) aufweist.

10. Maschine nach einem der Ansprüche 1 bis 9, dadurch gekennzeichnet, daß der untere Teil des Klärbehälters (13) mit einem Sicherheitsverschluß (35) ausgerüstet ist.

11. Maschine nach einem der Ansprüche 1 bis 10, dadurch gekennzeichnet, daß die Überführung des Elektrolyts aus dem Auffangtrog (29) in den Reaktor mittels einer Pumpe (32) erfolgt.

## Claims

1. Machine for the automatic treatment of small quantities of electrolyte from spent lead acid batteries, comprising a reception vat for the electrolyte, transferring the electrolyte, preferably by gravity, to a reactor (4), where the electrolyte is treated by batches during a treatment cycle, means for establishing a flow of liquid through a circuit (5, 7, 10) outside the reactor, the liquid being taken from the reactor and returned to it after having passed through said circuit, a detector (15) suitable for measuring the pH of the liquid flowing through said circuit, a reservoir (19) for storing in liquid form a neutralization reagent, means (17, 18) for removing neutralization reagent from said reservoir and introducing it into the reactor containing the electrolyte to be neutralized, means for regulating the pH for controlling, as a function of the pH measured by said detector, said means for removing neutralization reagent from said reservoir and introducing it into the reactor until a pH value compatible with a discharge to drain of the neutralized electrolyte is obtained, means (21, 22) for the introduction of a flocculating agent for lead into the reactor, means for making possible the transfer, after neutralization and flocculation, of the contents of the reactor to a settling tank (13) that can be emptied, means (25, 27) for removing the purified liquid phase from the upper part of the settling tank, and discharging it, preferably after having passed through a filtration vessel (28).

2. Machine according to Claim 1, characterized in that the pH detector comprises a measuring electrode (9) situated in the bottom of a U-shaped part (8) of said circuit (5, 7) and means for supplying said circuit with water after the machine has stopped, for keeping the electrode in water.

3. Machine according to either one of Claims 1 or 2, characterized in that the neutralization reagent is sodium carbonate.

4. Machine according to any one of Claims 1 to 3, characterized in that the flocculating agent is aluminium polychlorosulphate.

5. Machine according to any one of Claims 1 to 4, characterized in that the means for the introduction of flocculating agent comprise a constant flow pump (22).

6. Machine according to any one of Claims 1 to 5, characterized in that it comprises a means for the introduction of a lead insolubilizing agent.

7. Machine according to Claim 6, characterized in that the lead insolubilizing agent is a sodium salt of a sulphured organic compound.

8. Machine according to any one of Claims 1 to 7, characterized in that the means for the introduction of the neutralization reagent comprise a pump (17).

9. Machine according to any one of Claims 1 to 8, characterized in that the means for the transfer of the contents of the reactor to the settling tank comprise a pump (10).

10. Machine according to any one of Claims 1 to 9, characterized in that the lower part of the settling tank (13) is equipped with a safety plug (35).

11. Machine according to any one of Claims 1 to 10, characterized in that the transfer of the electrolyte from the reception vat (29) to the reactor is performed by means of a pump (32).
